# EUROPEAN PATENT APPLICATION

(11) **EP 4 700 192 A1**
(43) Date of publication of application: **25.02.2026**
(21) Application number: 24382919.9
(22) Date of filing: 20.08.2024
(51) Int. Cl.: E04H 12/12, E04H 12/16, F03D 13/20

(54) **LEVELLING SYSTEM OF A PLATE CONFIGURED TO BE DISPOSED OVER A CONCRETE SECTION OF A WIND TURBINE TOWER AND METHOD OF LEVELLING A PLATE**

(71) Applicant: Nordex Energy Spain, S.A.U., 31395 Barasoain (Navarra) (ES)
(72) Inventor: Zariquiegui, Idoya, Barasoain (ES); Cerrillo, Vanessa, Barasoain (ES)
(74) Representative: Pons IP

(57) **Abstract**

Levelling system for wind turbine towers, the towers consisting of stacked sections, the system comprising a plate (1) configured to be disposed over a concrete section (50) of the wind turbine tower (100), the plate (1) having levelling means (21) configured to level the plate (1) in horizontal position over an upper surface (13) of the tower section positioned below the levelling system.

## Description

### OBJECT OF THE INVENTION

The object of the invention is a levelling system of a plate configured to be disposed over a concrete section of a wind turbine tower which reinforces the upper part of the concrete section of the tower of the wind turbine.

The invention also relates to a method of levelling a plate configured to be disposed over a concrete section of a wind turbine tower.

### BACKGROUND OF THE INVENTION

Wind turbines comprise a tower, a nacelle which houses the electrical generator and a rotor formed in turn by at least two blades. The tower of the wind turbine supports the nacelle and the rotor. Large wind turbines have steel, lattice, or reinforced concrete towers or even mixed-type towers, the latter comprising sections of different materials, for example, a lower section of concrete and an upper section of steel or lattice.

Due to the height of the wind turbines, the tower has to be divided into several annular sections which are stacked during the wind turbine assembly stage thus forming the full height of the tower. Dividing the tower into sections has the advantage that each section has a size such that its transport by road or rail is easier.

One of the most commonly used materials for large towers is concrete, since it involves competitive costs and performance compared to those to produce steel towers of similar characteristics. However, the weight of each concrete tower section can easily exceed one hundred tons, this fact being infrequent for metal tower sections, so stacking the concrete sections requires heavy-tonnage lifting and positioning means. The cost of using such lifting and positioning means, which may be for example a crane, is directly related to the tonnage and height that it is capable of handling and the time of use thereof. This high-tonnage crane is also used for lifting and positioning the nacelle, as the weight of the nacelle may also exceed 100 tons.

It is known in the state of the art, the towers for wind turbines being of the kind of "concrete-steel hybrid" towers comprising a first tower section comprising at least two concrete segments and further comprising a second tower section made of steel, the tower further comprising an adapter for connecting the two tower sections, and the towers for wind turbines being of the kind of "full-concrete" towers comprising an adapter disposed in the upper part of the upper concrete tower section and below a wind turbine component, the wind turbine component being preferably the yaw bearing of the nacelle.

In an embodiment, the adapter is made entirely of steel, and a grout layer must be disposed between the adapter and the first tower section made of concrete to establish a connection between the steel adapter and the concrete section.

However, this grout layer must be levelled for the right assembly of the adapter onto the concrete section, increasing the assembly times and consequently the associated costs. Furthermore, cracks in the concrete section may appear due to the tightening of the bolts intended to join the adapter and the concrete section.

The present invention solves the problems described above.

### DESCRIPTION OF THE INVENTION

The invention relates to a levelling system of a plate configured to be disposed over a concrete section of a wind turbine tower,
wherein the wind turbine tower comprises:
at least one concrete section comprising at least one concrete segment, the concrete segment comprising a horizontal upper surface, and
an adapter disposed above the at least one concrete section, and
wherein the plate comprises:
   - at least one horizontal flank, wherein in use, the horizontal flank is intended to be disposed over, at least partially, the horizontal upper surface of the at least one concrete segment of the at least one concrete section, and
   - at least one levelling hole, preferably three levelling holes, disposed in the horizontal flank; and
wherein the levelling system comprises:
   levelling means configured to level the plate over the horizontal upper surface in a horizontal position.

In this way, once levelled, the horizontal flank of the plate defines a levelled horizontal upper surface for the concrete section, also allowing to attach the adapter in a horizontal position, since the adapter is intended to be disposed, at least partially, onto the horizontal flank of the plate, preferably onto an upper surface of the horizontal flank. Preferably, the maximum allowed inclination of the plate, transversally and longitudinally, is smaller than 0,10°, more preferably, smaller than 0,05°.

Optionally, the plate is a steel plate.

Optionally, the adapter is configured to connect a concrete section of a wind turbine tower to a steel section of the wind turbine tower.

Optionally, the adapter is configured to connect a concrete section of a wind turbine tower to a nacelle of the wind turbine tower.

Optionally, the adapter is disposed over the plate. More preferably, the plate is configured to be in contact with the adapter once the adapter is disposed on the plate.

Optionally, the wind turbine comprises a tower, a nacelle, a hub, and at least 2 blades.

Optionally, the levelling means comprise at least one bolt, preferably at least three bolts, configured to be threaded or screwed in at least one levelling hole, preferably three levelling holes, of the plate and to make contact with the horizontal upper surface of the concrete segment or with at least one additional element, preferably three additional elements, disposed on the at least one concrete segment of the at least one concrete section. By screwing or unscrewing the at least one bolt, once it has made contact with the horizontal upper surface of the concrete segment or with the at least one additional element plate, the plate can be moved closer to or further away from the horizontal upper surface of the concrete segment with great precision, thus levelling the plate. Preferably, by screwing or unscrewing at least three bolts independently, levelling of the plate is achieved.

Optionally, each one of the at least one additional element comprises a supporting plate disposed on the horizontal upper surface of the at least one concrete segment of the at least one concrete section. Preferably, the dimensions of the supporting plates are greater than 70mm x 70mm x 2mm and smaller than 170mm x 170mm x 18 mm.

Preferably, the levelling system further comprises fixing means configured to fix the supporting plate on the horizontal upper surface of the at least one concrete segment of the at least one concrete section. Preferably, the fixing means are glueing means.

Optionally, the system further comprises templating means configured to establish the position of the at least one supporting plate on the horizontal upper surface of the at least one concrete segment of the at least one concrete section.

Preferably, the templating means are configured to be disposed on the horizontal upper surface of the at least one concrete segment of the at least one concrete section.

Optionally, the system further comprises aligning means configured to align the plate with the horizontal upper surface of the at least one concrete segment of the at least one concrete section.

Preferably, the aligning means comprises at least one aligning pin configured to be disposed in at least one bolt of the concrete segment of the at least one concrete section which projects from the horizontal upper surface of the at least one concrete segment, wherein the at least one bolt is configured to join the adapter to the at least one concrete section. In this way, the length of the at least one bolt of the concrete segment is increased and the alignment of the plate by means of the at least one bolt can be carried out from a position wherein the distance between the plate and the horizontal upper surface is greater.

Optionally, the system further comprises sealing means configured to seal the joint between the bolts of the concrete segment and the concrete segment, avoiding the leaking of an injection material on such joint, so that it remains unchanged. Optionally, the sealing means are configured to ease the alignment of the plate with the horizontal upper surface of the at least one concrete segment of the at least one concrete section.

Optionally, the system further comprises air-outlet means configured to allow the outlet of the air as an injection material is poured, preferably mortar, grout or resin. Preferably, the air-outlet means comprises at least a hose configured to be attached to at least one air-outlet hole of the plate.

Optionally, the system further comprises a formwork configured to define the horizontal joint between the plate and the horizontal upper surface of the at least one concrete segment, horizontal joint defined by the injection material once cured. Preferably, the formwork comprises an internal horizontal formwork and an external horizontal formwork configured to define the width of the horizontal joint. More preferably the horizontal formwork comprises a foam.

Optionally, the system further comprises lifting means configured to lift the plate over the horizontal upper surface of the at least one concrete segment of the at least one concrete section. Preferably, the lifting means comprise at least two eyebolts configured to be fixed in two lifting holes of the at least one plate. Preferably, the lifting means further comprises chains and/or slings configured to be attached to the at least two eyebolts.

Preferably, the at least one concrete section comprises three concrete segments.

Preferably, the at least one concrete section comprises a vertical joint disposed between adjacent concrete segments.

Optionally, the system further comprises reinforcement means configured to reinforce and join adjacent plates, wherein the reinforcement means are disposed over the adjacent plates.

The reinforcement means are configured to be inserted through at least one bolt of each one of adjacent concrete segments of the concrete section.

Optionally, the system further comprises fixing means configured to fix the reinforcement means to the plates.

Optionally, the system further comprises checking means configured to check the horizontal position of the plate/s once the plate/s is/are or has/have been levelled by means of the levelling means.

Optionally, the system further comprises pouring means configured to pour an injection material between the plate and the horizontal upper surface of the at least one concrete segment of the at least one concrete section once the plate/s has/have been levelled or while the plate/s is/are being levelled.

Optionally, the system further comprises securing means configured to secure the levelled position of the plate. Preferably, the securing means comprise at least one bushing configured to be inserted in at least one bolt of the concrete segment of the at least one concrete section and to make contact with an upper surface of the horizontal flank of the plate, and at least one nut configured to tighten the bushing against the plate, thus securing the plate in the levelled position.

Optionally, the system further comprises lowering means configured to descend the plate being guided by the aligning means in order to allow the levelling means to carry out the levelling of the plate over the horizontal upper surface in a horizontal position. Preferably, the lowering means comprise at least one bushing configured to be inserted in at least one bolt of the concrete segment of the at least one concrete section and to make contact with an upper surface of the horizontal flank of the plate, and at least one nut configured to tighten the bushing against the plate, thus lowering the plate.

The invention also relates to a method of levelling a plate configured to be disposed over a concrete section of a wind turbine tower, wherein the wind turbine tower comprises at least one concrete section comprising at least one concrete segment, and an adapter disposed above the at least one concrete section,
wherein the plate comprises:
   - at least one horizontal flank, wherein in use, the horizontal flank is intended to be disposed over, at least partially, a horizontal upper surface of the at least one concrete segment of the at least one concrete section, and
   - at least one levelling hole, preferably three levelling holes, disposed in the horizontal flank; and
wherein the method of levelling comprises the following steps:
   a step of levelling the plate over the horizontal upper surface of a concrete segment in a horizontal position.

Optionally, the step of levelling the plate over the horizontal upper surface in a horizontal position comprises a step of threading at least one bolt, preferably three bolts, in at least one levelling hole, preferably three levelling holes, of the plate till the at least one bolt, preferably till the at least three bolts makes contact with the horizontal upper surface or with at least one additional element, preferably three additional elements, disposed on the at least one concrete segment of the at least one concrete section.

Preferably, the at least one bolt is disposed at a distance smaller than 50mm, more preferably smaller than 35mm from the horizontal upper surface or the at least one additional element at the beginning of the levelling step.

Preferably, the distance between a lower surface of the horizontal flank of the plate and the upper surface of the concrete segment at the beginning of the levelling step is between 40 and 60mm, more preferably between 40 and 50mm, even more preferably 40mm.

Optionally, the method further comprises a step of disposing each one of the at least one additional element, preferably being supported, on the horizontal upper surface of the at least one concrete segment of the at least one concrete section.

Preferably, the step of disposing each one of the at least one additional element on the horizontal upper surface of the at least one concrete segment of the at least one concrete section comprises a step of fixing the at least one additional element on the upper surface of the at least one concrete segment of the at least one concrete section. Preferably, the step of fixing the at least one additional element comprises a step of glueing the at least one additional element to the upper surface of the at least one concrete segment of the at least one concrete section.

Optionally, the method further comprises a step of establishing the position of at least one supporting plate on the horizontal upper surface of the at least one concrete segment of the at least one concrete section, preferably disposing templating means on the horizontal upper surface of the at least one concrete segment of the at least one concrete section.

Optionally, the method further comprises a step of aligning the plate with the horizontal upper surface of the at least one concrete segment of the at least one concrete section.

Preferably, the step of aligning comprises a step of disposing at least one aligning pin in at least one bolt of the concrete segment of the at least one concrete section which projects from the horizontal upper surface of the at least one concrete segment, wherein the at least one bolt is configured to join the adapter to the at least one concrete section.

Optionally, the method further comprises a step of sealing the joint between the bolts of the concrete segment and the concrete segment.

Optionally, the method further comprises a step of letting the air out as an injection material is poured. Preferably, the step of letting the air out comprises a step of attaching at least a hose to at least one air-outlet hole of the plate.

Optionally, the method further comprises a step of formworking a horizontal joint between the plate and the horizontal upper surface of the at least one concrete segment, horizontal joint defined once cured a material injected between the plate and the horizontal upper surface.

Optionally, the method further comprises a step of injecting a vertical joint between adjacent concrete segments, vertical joint defined once cured a material, preferably mortar, grout or resin, injected between adjacent concrete segments.

Preferably, the step of injecting a vertical joint between adjacent concrete segments is carried out after the step of levelling the plate over the horizontal upper surface of a concrete segment in a horizontal position.

Preferably, the step of injecting a vertical joint between adjacent concrete segments is carried out before the step of formworking a horizontal joint between the plate and the horizontal upper surface of the at least one concrete segment, horizontal joint defined once cured a material injected between the plate and the horizontal upper surface

Optionally, the method further comprises a step of lifting the plate over the horizontal upper surface of the at least one concrete segment of the at least one concrete section. Preferably, the step of lifting comprises a step of fixing at least two eyebolts in two lifting holes of the at least one plate. Preferably, the step of lifting further comprises a step of attaching chains and/or slings to the at least two eyebolts.

Preferably, the step of lifting the plate over the horizontal upper surface is carried out for three plates.

Optionally, the method further comprises a step of reinforcing and joining adjacent plates disposed over adjacent concrete segments of the concrete section.

Preferably, the step of reinforcing comprises a step of inserting reinforcement means through at least one bolt of adjacent concrete segments of the concrete section on adjacent plates.

Optionally, the step of reinforcing further comprises a step of fixing reinforcement means to the plates.

Optionally, the method further comprises a step of checking the horizontal position of the plate/s once the plate/s is/are or has/have been levelled after the step of levelling.

Optionally, the method further comprises a step of pouring an injection material between the plate and the horizontal upper surface of the at least one concrete segment of the at least one concrete section once the plate/s has/have been levelled or while the plate/s is/are being levelled.

Optionally, the method further comprises a step of securing the levelled position of the plate. Preferably, the step of securing comprises a step of insertion of at least one bushing in at least one bolt of the concrete segment of the at least one concrete section, making contact with an upper surface of the horizontal flank of the plate, and a step of tightening the at least one bushing against the plate, thus securing the plate in the levelled position, by means of at least one nut.

### DESCRIPTION OF THE FIGURES

To complement the description being made and for the sake of a better understanding of the characteristics of the invention according to a preferred practical embodiment thereof, attached as an integral part of said description are a set of drawings wherein, for the purpose of illustration and not limiting the scope of the invention, the following is shown:
Figure 1 shows a perspective view of the plate according to a preferred embodiment of the invention.
Figure 2 shows a plan view of the plate of Figure 1.
Figure 3 shows an elevation view of a wind turbine comprising a tower which in turn comprises a concrete section which in turn comprises three concrete segments and three plates of Figure 1.
Figure 4 shows the first template of the templating means configured to be disposed in a circumferential end of the horizontal upper surface of the at least one concrete segment.
Figure 5 shows the second template of the templating means configured to be disposed in the centre of the horizontal upper surface of the at least one concrete segment in a circumferential direction.
Figure 6 shows the levelling means of the levelling system of a plate configured to be disposed over a concrete section of a wind turbine tower according to the invention.
Figure 7 shows the position of six supporting plates wherein six bolts of the levelling means are configured to make contact.
Figure 8 shows the position of three aligning pins of the aligning means disposed in three bolts of each of the three concrete segments.
Figure 9 shows the sealing means configured to seal a joint between the bolts of the concrete segment and the concrete segment.
Figure 10 shows the hoses of the means configured to let the air out as the injection material is poured, that are attached to the air-outlet holes of the plate.
Figure 11 shows the formwork configured to define the horizontal joint between the plate and the horizontal upper surface of the at least one concrete segment.
Figure 12 shows the lifting means configured to lift the plate over the horizontal upper surface of the at least one concrete segment of the at least one concrete section.
Figure 13 shows the reinforcement means configured to reinforce and join adjacent plates once lifted and disposed over adjacent plates.
Figure 14 shows the securing means configured to secure the levelled position of the plate.
Figures 15 to 17 show the steps of levelling each plate over the horizontal upper surface in a horizontal position.

### PREFERRED EMBODIMENT OF THE INVENTION

The following is a detailed description of a levelling system of a plate (1) of a concrete section (50) of a wind turbine tower (100), wherein the plate (1) is intended to be disposed over the concrete section (50) of the wind turbine tower (100), wherein the wind turbine tower (100) comprises at least one concrete section (50) comprising at least one concrete segment (10), and an adapter (20) disposed above the at least one concrete section (50).

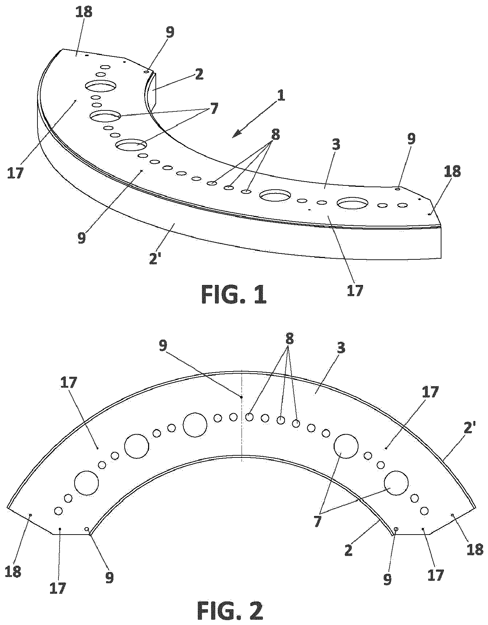

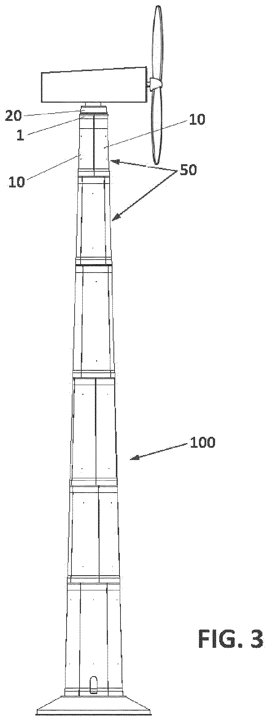

The plate (1) is shown in Figures 1 to 3 and comprises:
- at least one essentially vertical flank (2, 2'), wherein in use, the at least one essentially vertical flank (2, 2') is intended to be disposed adjacent to, at least partially, an essentially vertical upper surface (12, 12') of the at least one concrete segment (10) of the at least one concrete section (50), and
- a horizontal flank (3), wherein in use, the horizontal flank (3) is intended to be disposed over, at least partially, a horizontal upper surface (13) of the at least one concrete segment (10) of the at least one concrete section (50).

Preferably, the plate (1) comprises two essentially vertical flanks (2, 2') being an internal essentially vertical flank (2) and an external essentially vertical flank (2'), wherein in use, the internal essentially vertical flank (2) is intended to be disposed adjacent to an essentially internal vertical upper surface (12) of the at least one concrete segment (10) of the at least one concrete section (50), and the external essentially vertical flank (2') is intended to be disposed adjacent to an essentially external vertical upper surface (12') of the at least one concrete segment (10) of the at least one concrete section (50).

The plate (1) comprises a first set of holes (7) intended to accommodate tendons (30) passing through the at least one concrete section (50) and/or a second set of holes (8) intended to accommodate bolts (40) configured to join the adapter (20) to at least one concrete section (50), and/or levelling holes (9) intended to enable the injection of an injection material (15) between the plate (1) and the at least one concrete segment (10) of the at least one concrete section (50) and/or lifting holes (17) configured to allow the lifting of the plate (1) and/or air-outlet holes (18) configured to allow the outlet of the air as an injection material (15) is poured.

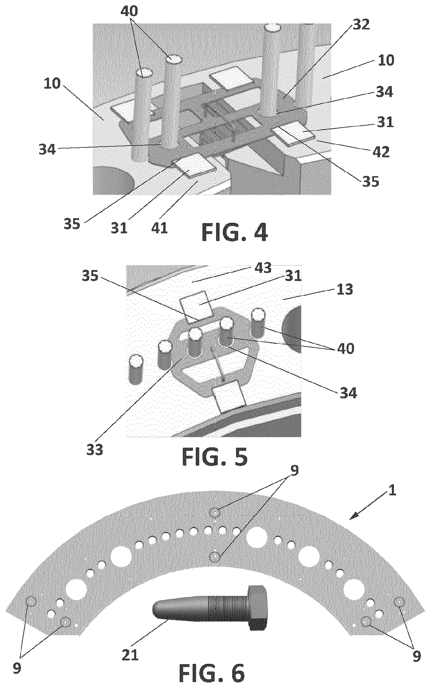

The levelling system of the invention of the plate (1) shown in Figures 1 to 3, is shown in Figures 4 to 17.

The levelling system comprises levelling means (21) configured to level the plate (1) over the horizontal upper surface (13) in a horizontal position.

Figure 6 shows the levelling means (21) for this preferred embodiment, wherein the levelling means (21) comprise at least three bolts (21), six bolts in a preferably embodiment, configured to be threaded in at least three levelling holes (9), six holes in a preferably embodiment, of the plate (1) and to make contact with the horizontal upper surface (13) or with at least three additional elements (31) disposed on the at least one concrete segment (10) of the at least one concrete section (50).

In this embodiment, each one of the at least three additional elements comprises a supporting plate (31) disposed on the horizontal upper surface (13) of the at least one concrete segment (10) of the at least one concrete section (50).

For carrying out the disposition of the supporting plates (31) on the horizontal upper surface (13), the system further comprises templating means (32, 33) configured to establish the position of the at least three supporting plates (31) on the horizontal upper surface (13). The templating means (32, 33) are configured to be disposed on the horizontal upper surface (13) of the at least one concrete segment (10) of the at least one concrete section (50). In this embodiment, the templating means (32, 33) comprises a first template (32), shown in Figure 4, configured to be disposed in a circumferential end (41, 42) of the horizontal upper surface (13) of the at least one concrete segment (10) and a second template (33), shown in Figure 5, configured to be disposed in the centre (43) of the horizontal upper surface (13) of the at least one concrete segment (10) in a circumferential direction. Preferably, the first and second templates (32, 33) comprises holes (34) configured to be inserted in the bolts (40) of the at least one concrete segment (10) thus defining the position of the first and second templates (32, 33) with regard to the horizontal upper surface (13), and/or at least one shape (35), preferably a recess, corresponding to a shape of the supporting plates (31). In this way, the position of the supporting plates (31) is unambiguously defined. Preferably, the first template (32) is configured to be disposed in circumferential ends of the horizontal upper surfaces (13) of two adjacent concrete segments (10) and comprises at least two shapes (35) corresponding to the shape of two supporting plates (31).

Preferably, the levelling system further comprises fixing means, more preferably glueing means (not shown) configured to fix the supporting plates (31) on the horizontal upper surface (13) of the at least one concrete segment (10) of the at least one concrete section (50).

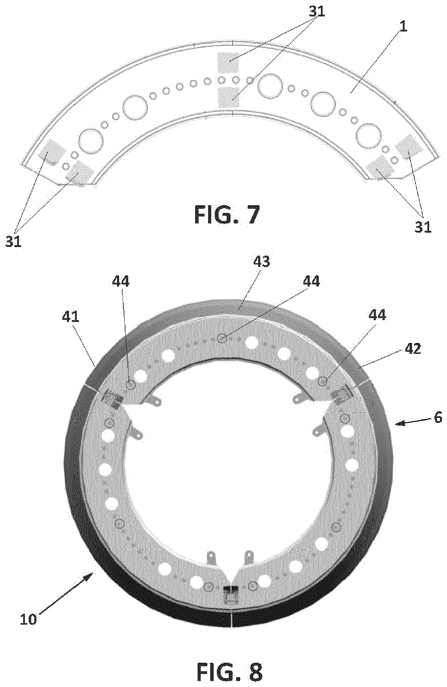

In this embodiment, the system comprises six bolts (21) configured to be threaded in six levelling holes (9) of the plate (1) and to make contact with six supporting plates (31), shown in Figure 7, disposed on the at least one concrete segment (10) of the at least one concrete section (50). Preferably, two bolts (21) are disposed in a first circumferential end (41) of the horizontal upper surface (13) of the at least one concrete segment (10) on opposite sides of the row of bolts (40) formed on the at least one concrete segment (10), two bolts (21) are disposed in a second circumferential end (42) of the horizontal upper surface (13) of the at least one concrete segment (10) on opposite sides of the row of bolts (40) formed on the at least one concrete segment (10) and two bolts (21) are disposed in a centre (43) of the horizontal upper surface (13) of the at least one concrete segment (10) in a circumferential direction on opposite sides of the row of bolts (40) formed on the at least one concrete segment (10). The position of the six bolts (21) is shown in Figure 6, being indicated the position of the levelling holes (9) for accommodating the bolts (21).

Preferably, the system further comprises aligning means configured to align the plate (1) with the horizontal upper surface (13) of the at least one concrete segment (10) of the at least one concrete section (50). Preferably, the aligning means comprises at least one aligning pin (44) configured to be disposed in at least one bolt (40) of the concrete segment (10) of the at least one concrete section (50), thus increasing the length of the bolts (40) of the concrete segment (10). In this embodiment, the system comprises three aligning pins (44) disposed in three bolts (40) of the concrete segment (10), preferably in the first circumferential end (41), in the second circumferential end (42) and in the centre (43) of the horizontal upper surface (13) of the at least one concrete segment (10), as shown in Figure 8.

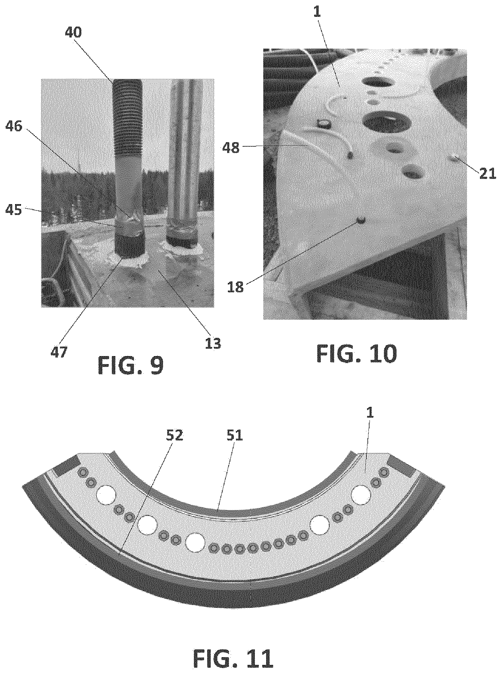

Preferably, the system further comprises sealing means (45, 46, 47) shown in Figure 9, configured to seal a joint between the bolts (40) of the concrete segment (10) and the concrete segment (10), wherein the sealing means (45, 46, 47) are configured to ease the alignment of the plate (1) with the horizontal upper surface (13) of the at least one concrete segment (10) of the at least one concrete section (50). In this embodiment, the sealing means (45, 46, 47) comprises a tubular foam (45) attached around the at least one bolt (40) of the concrete segment (10) and a tape (46) attached at a lower end of the at least one bolt (40) and/or a silicone (47) at the lower end of the at least one bolt (40) in the horizontal upper surface (13) of the at least one concrete segment (10).

Preferably, the system further comprises air-outlet means (48) configured to allow the outlet of the air as the injection material is poured. The air-outlet means comprises at least a hose (48) configured to be attached to at least one air-outlet hole (18) of the plate (1) as shown in Figure 10.

Preferably, the system further comprises a formwork (51, 52) configured to define the horizontal joint between the plate (1) and the horizontal upper surface (13) of the at least one concrete segment (10), horizontal joint defined by the injection material (60) once cured. Preferably, the formwork (51, 52) comprises an internal horizontal formwork (51) and an external horizontal formwork (52) configured to define the width of the horizontal joint, as shown in Figure 11.

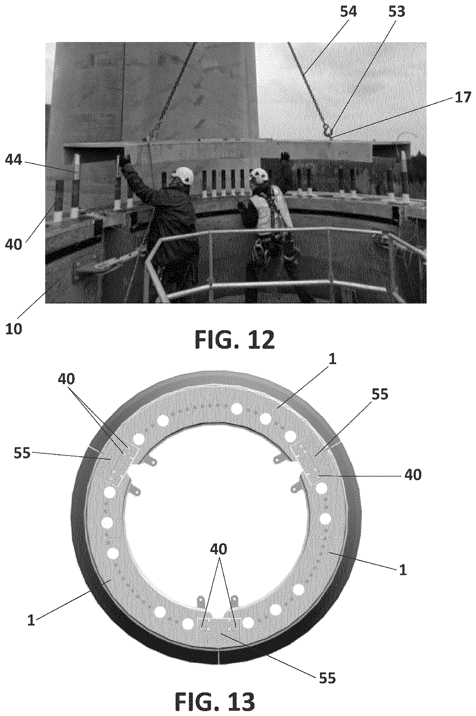

Preferably, the system further comprises lifting means (53, 54) configured to lift the plate (1) over the horizontal upper surface (13) of the at least one concrete segment (10) of the at least one concrete section (50). The lifting means comprise at least two eyebolts (53) configured to be fixed in two lifting holes (17) of the at least one plate (1) and chains (54) and/or slings configured to be attached to the at least two eyebolts (53) as shown in Figure 12.

Preferably, the at least one concrete section (50) comprises three concrete segments (10).

Preferably, the system further comprises reinforcement means (55), more preferably reinforcement plates, configured to reinforce and join adjacent plates (1), as can be seen in Figure 13, wherein the reinforcement means (55) are disposed over adjacent plates (1) and are configured to be inserted through at least one bolt (40) of each one of adjacent concrete segments (10) of the concrete section (50).

The system further comprises fixing means, (preferably bolts an/or nuts not shown) configured to fix the reinforcement means to the plates (1).

The system further comprises checking means (not shown), preferably inclinometers, configured to check the horizontal position of the plate/s (1) once the plate/s (1) is/are or has/have been levelled by means of the levelling means (21).

The system further comprises pouring means configured to pour an injection material (not shown) between the plate (1) and the horizontal upper surface (13) of the at least one concrete segment (10) of the at least one concrete section (50) once the plate/s (1) has/have been levelled or while the plate/s is/are being levelled.

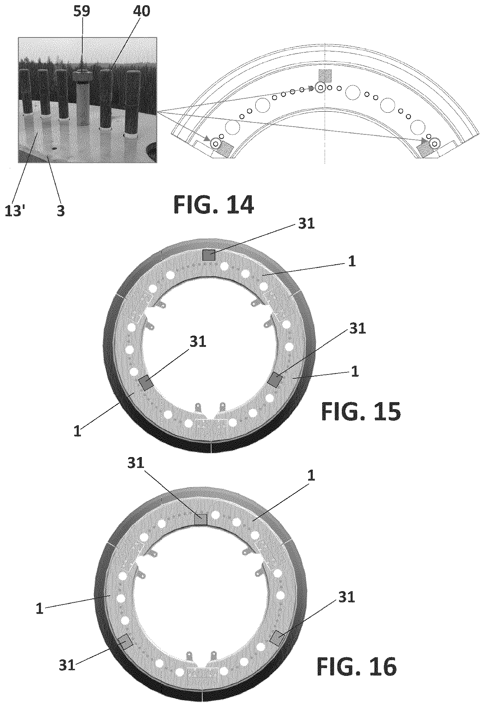

The system further comprises securing means (58, 59) configured to secure the levelled position of the plate. Preferably, the securing means (58, 59) comprise at least one bushing (58) configured to be inserted in at least one bolt (40) of the concrete segment (10) of the at least one concrete section (50) and to make contact with an upper surface (13') of the horizontal flank (3) of the plate (1), and at least one nut (59) configured to tighten the bushing (58) against the plate (1), thus securing the plate (1) in the levelled position, as shown in Figure 14.

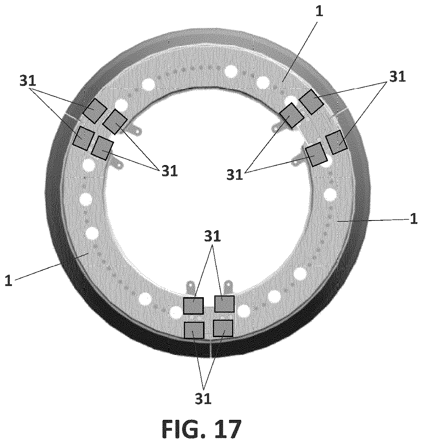

The invention also relates to a method of levelling at least one plate (1) as described above, preferably three plates (1) forming a circumference.
wherein the method comprises:
a step of lifting each one of the plates (1) over the horizontal upper surface (13) of the corresponding concrete segment (10) of the concrete section (50);
a step of reinforcing and joining adjacent plates (1) disposed over adjacent concrete segments (10) of the concrete section (50) by inserting and fixing reinforcement means through at least one bolt of adjacent concrete segments (10) of the concrete section (50) on adjacent plates (1).
a step of levelling each plate (1) over the horizontal upper surface in a horizontal position which in turn comprises a step of threading one bolt (21) in a centered position in one levelling hole (9) of the plate (1) till the bolt (21) makes contact with the supporting plate (31) disposed on the concrete segment (10), for each one of the concrete segments (10) as shown in figure 15, another step eof levelling the plate (1) over the horizontal upper surface in a horizontal position which in turn comprises a step of threading one bolt (21) in another centered position in one levelling hole (9) of the plate (1) till the bolt (21) make contact with the supporting plate (31) disposed on the concrete segment (10), for each one of the concrete segments (10) as shown in figure 16, and a step of threading four bolts (21), two by two in the two circumferential end (41, 42) in corresponding levelling holes (9) of the plate (1) till the bolt (21) make contact with the supporting plate (31) disposed on the concrete segment (10), for each one of the concrete segments (10) as shown in figure 17.

Each one of the threading steps may be followed by a step of checking the horizontal position of the plates (1).

The method further comprises a step of lifting the plate over the horizontal upper surface of the at least one concrete segment of the at least one concrete section. Preferably, the step of lifting comprises a step of fixing at least two eyebolts in two lifting holes of the at least one plate. Preferably, the step of lifting further comprises a step of attaching chains and/or slings to the at least two eyebolts.

The method further comprises a step of pouring an injection material (not shown) between the plates (1) and the horizontal upper surface (13) of the concrete segments (10) of the concrete section (50) once the plates (1) have been levelled or while the plates (1) are being levelled.

The method further comprises a step of letting the air out as an injection material is poured. Preferably, the step of letting the air out comprises a step of attaching at least a hose (48) to at least one air-outlet hole (18) of the plate (1), preferably before the step of pouring an injection material.

## Claims

1. A levelling system of a plate (1) configured to be disposed over a concrete section (50) of a wind turbine tower (100), wherein the wind turbine tower (100) comprises at least one concrete section (50) comprising at least one concrete segment (10), and an adapter (20) disposed above the at least one concrete section (50),
wherein the plate (1) comprises:
- at least one horizontal flank (3), wherein in use, the horizontal flank (3) is intended to be disposed over, at least partially, a horizontal upper surface (13) of the at least one concrete segment (10) of the at least one concrete section (50); and
- at least one levelling hole (9) disposed in the horizontal flank (3); and wherein the levelling system comprises levelling means (21) configured to level the plate (1) over the horizontal upper surface (13) in a horizontal position.

2. The levelling system of claim 1, wherein the levelling means comprises at least one bolt (21) configured to be threaded in at least one levelling hole (9) of the plate (1) and to make contact with the horizontal upper surface (13) or with at least one additional element (31) disposed on the at least one concrete segment (10) of the at least one concrete section (50).

3. The levelling system of claim 2, wherein each one of the at least one additional element comprises a supporting plate (31) disposed on the horizontal upper surface (13) of the at least one concrete segment (10) of the at least one concrete section (50).

4. The levelling system of claim 3, further comprising templating means (32, 33) configured to establish the position of the at least one supporting plate (31) on the horizontal upper surface (13) of the at least one concrete segment (10) of the at least one concrete section (50).

5. The levelling system of any of the previous claims, further comprising aligning means configured to align the plate (1) with the horizontal upper surface (13) of the at least one concrete segment (10) of the at least one concrete section (50).

6. The levelling system of claim 5, wherein the aligning means comprises at least one aligning pin (44) configured to be disposed in at least one bolt (40) of the concrete segment (10) of the at least one concrete section (50).

7. The levelling system of any of the previous claims, wherein the at least one concrete section (50) comprises three concrete segments (10), each one of them comprising an upper horizontal surface (13) wherein a plate (1) is configured to be disposed, and
wherein the system further comprises reinforcement means (55) configured to reinforce and join adjacent plates (1), wherein the reinforcement means (55) are disposed over adjacent plates (1).

8. The levelling system of any of the previous claims, further comprising pouring means configured to pour an injection material () between the plate (1) and the horizontal upper surface (13) of the at least one concrete segment (10) of the at least one concrete section (50) once the plate/s (1) has/have been levelled or while the plate/s (1) is/are being levelled.

9. A method of levelling a plate (1) configured to be disposed over a concrete section (50) of a wind turbine tower, wherein the wind turbine tower comprises at least one concrete section (50) comprising at least one concrete segment (10), and an adapter (20) disposed above the at least one concrete section (50),
wherein the plate (1) comprises:
- at least one horizontal flank (3), wherein in use, the horizontal flank (3) is intended to be disposed over, at least partially, a horizontal upper surface (13) of the at least one concrete segment (10) of the at least one concrete section (50).
- at least one levelling hole (9) disposed in the horizontal flank (3); and
wherein the method comprises a step of levelling the plate (1) over the horizontal upper surface (13) in a horizontal position.

10. The levelling method of claim 9, wherein the step of levelling the plate (1) over the horizontal upper surface (13) in a horizontal position comprises a step of threading at least one bolt (21) in at least one levelling hole (9) of the plate (1) till the at least one bolt (21) make contact with the horizontal upper surface (13) or with at least one additional element (31) disposed on the horizontal upper surface (13) of the at least one concrete segment (10) of the at least one concrete section (50).

11. The method of any of claims 9 or 10, further comprising a step of establishing the position of at least one supporting plate (31) on the horizontal upper surface (13) of the at least one concrete segment (10) of the at least one concrete section (50), preferably disposing templating means (32, 33) on the horizontal upper surface (13) of the at least one concrete segment (10) of the at least one concrete section (50).

12. The method of any of claims 9 to 11, further comprising a step of aligning the plate (1) with the horizontal upper surface (13) of the at least one concrete segment (10) of the at least one concrete section (50).

13. The method of any of claims 9 to 12, further comprising a step of reinforcing and joining adjacent plates (1) disposed over adjacent concrete segments (10) of the concrete section (50).

14. A wind turbine tower (100) comprising:
at least one concrete section (50) which in turn comprises at least one concrete segment (10), the concrete segment (10) comprising a horizontal upper surface (13),
a plate (1) comprising:
- at least one horizontal flank (3), wherein in use, the horizontal flank (3) is intended to be disposed over, at least partially, the horizontal upper surface (13) of the at least one concrete segment (10) of the at least one concrete section (50); and
- at least one levelling hole (9) disposed in the horizontal flank (3); and
a levelling system according to any of the claims 1 to 8 or wherein the plate (1) is levelled with the method of any of the claims 9 to 13.

15. A wind turbine comprising the wind turbine tower (100) of claim 14.
